# EUROPEAN PATENT APPLICATION

(11) **EP 3 050 931 A1**
(43) Date of publication of application: **03.08.2016**
(21) Application number: 14847565.0
(22) Date of filing: 18.09.2014
(51) Int. Cl.: C09D 11/40, B41J 2/01, B41M 5/00, B41M 5/50, B41M 5/52

(54) **INKJET INK SET, METHOD FOR PRODUCING INKJET PRINTED MATERIAL USING SAME, AND INKJET PRINTED MATERIAL**

(30) Priority: 27.09.2013 JP 2013201323
(71) Applicant: Seiren Co., Ltd., Fukui-shi Fukui 918-8560 (JP)
(72) Inventor: NAKATA, Kazuhiro, Fukui-shi Fukui 918-8560 (JP); KAWAMURA, Akihiro, Fukui-shi Fukui 918-8560 (JP)
(74) Representative: Studio Torta S.p.A.
(86) International application number: PCT/JP2014/074720
(87) International publication number: WO 2015/046020

(57) **Abstract**

An inkjet ink set which comprises an ink containing an inorganic pigment and a solvent, the inorganic pigments include yellow, red, blue, and black components, the yellow pigment is at least one selected from a group consisting of antimony pigments, vanadium pigments, and praseodymium pigments, the red component is a tin-chromium pigment, the blue component is a cobalt pigment, and the black component is an iron pigment.

## Description

### TECHNICAL FIELD

The present invention relates to an inkjet ink set which comprises an ink containing an inorganic pigment as a coloring material, a method for producing an inkjet printed material using the same, and an inkjet printed material. More particularly, the present invention relates to an inkjet ink set which is less liable to be discolored and decolored and excellent in clearness even after the ink is applied to an inorganic substrate and undergo a calcination process and, in addition, is high in productivity at a high concentration, a method for producing an inkjet printed material using the same, and an inkjet printed material.

### BACKGROUND OF THE INVENTION

Conventionally, heat resistance, color stability, and light stability are valued for coloration of inorganic substrates such as potteries and porcelains and metals. From these viewpoints, inorganic pigments are mainly used as a coloring material. Inorganic pigments are fixed to an inorganic material by calcination.

In recent years, there is a growing trend toward sophisticated design in these fields, and various studies on color variation of inorganic pigments have been conducted. For example, inorganic pigments with particle sizes which provide a wide color range and excellent color development properties have been proposed. However, sufficient results have not been obtained.

In general, the colors of inorganic pigments of their own, instead of mixture of colors, have been proposed in these studies. The reason for this is that combining inorganic pigments may cause decoloration and discoloration, depending on conditions such as calcination temperature. It is believed that the discoloration and decoloration occur because calcining two or more inorganic pigments at the same time causes interactions among the inorganic pigments, and that leads to situations such as changes in crystal structures. Therefore, when coloring materials with different calcination temperatures are used, a process of calcination needs to be repeated for multiple times, the colors tend to have less reproducibility as a result.

As a method for solving the problems mentioned above, the techniques described in Patent Document 1 and Patent Document 2 are proposed. In Patent Document 1, it is proposed that, for representing a wide color range in inkjet, purple gold is selected for a magenta component, and cadmium red is selected for a red component. In Patent Document 2, it is proposed to adjust particle sizes of inorganic pigments. In Patent Document 3, aqueous inks are proposed as inkjet ink.

### PRIOR ART DOCUMENT(S)

### Patent Document(s)

Patent Document 1: JP 2004-263176 A
Patent Document 2: JP 2008-222962 A
Patent Document 3: JP 2006-002100 A

### SUMMARY OF THE INVENTION

According to the prior arts mentioned above, efficient use of inorganic pigments for inkjet printing has not been achieved. Namely, in the method described in Patent Document 1, purple gold is selected. That makes ink cost high. In addition, a configuration which constructs an image with five colors comprising two colors of red ink is adopted. That makes apparatus cost high. Also, in general, color development varies with an application amount and a pigment concentration in the form of ink. However, Patent Document 2 does not mention conditions for image construction in inkjet. Therefore, it is not clear whether excellent color representation can be achieved. Furthermore, the aqueous inks in Patent Document 3 have a high surface tension. Consequently, they have a low permeability to a receiver, the ink amount tends to be limited to be smaller, and the appearance is spoiled after calcination. Also, for achieving high color development, a large amount of pigment needs to be mixed. However, the ink mixed with a large amount of pigment dries easily and tends to cause nozzle clogging. As a result, that decreases the ejection stability of inkjet and lowers the productivity.

The present invention, while taking the known problems as mentioned above into consideration, aims to provide an inkjet ink set with inorganic pigments as a coloring material, an inkjet ink set which is less liable to be discolored and decolored during calcination, is excellent in clearness, and, in addition, is high in productivity at a high concentration, a method for producing an inkjet printed material using the same, and an inkjet printed material.

The inventors, after their diligent work in trying to attain the above object, has completed the invention by finding out that an ink set which is excellent in color representation and is resistant to discoloration and decoloration after calcination can be obtained by selecting particular inorganic pigments for a yellow, red, blue, and black components and using them for the ink. They also found out that a more preferable ink set can be obtained by adjusting a pigment content of ink, an ink application amount, an ink surface tension, etc.

That is, an inkjet ink set of one aspect of the present invention, which solves the above problems, consists of ink comprising inorganic pigments and solvents, wherein the inorganic pigments include yellow, red, blue, and black components, the yellow component is at least one selected from a group consisting of antimony pigments, vanadium pigments, and praseodymium pigments, the red component is a tin-chromium pigment, the blue component is a cobalt pigment, and the black component is an iron pigment.

### DETAILED DESCRIPTION

### [Inkjet ink set]

An inkjet ink set of one embodiment of the present invention will be described in detail in the following. The inkjet ink set of the embodiment (hereinafter referred to simply as ink set as well) includes ink comprising inorganic pigments and solvents. The inorganic pigments include particular, yellow, red, blue, and black components. Such ink set of the embodiment is less liable to be discolored and decolored during calcination, is excellent in clearness, and is high in productivity at a high concentration. Each configuration will be described below.

### <Inorganic pigments>

Inorganic pigments are a coloring material used for the ink set of the embodiment and consist of metals, metal oxides, or metal salts. In general, inorganic pigments are stable against heat and light. On the other hand, due to their structures, inorganic pigments are poor in color representation and are decomposed easily by oxidation and deoxidation. Thus, in general, inkjet printing with inorganic pigments provides a narrow range of colors. The embodiment, however, achieves an inkjet printed material which is excellent in color development by selecting particular pigments and in ejection stability and permeability to a substrate by selecting solvents.

### (Yellow component)

The yellow component included in the inorganic pigments of the embodiment is at least one selected from a group consisting of antimony pigments, vanadium pigments, and praseodymium pigments. Antimony pigments, vanadium pigments, and praseodymium pigments allow representation of bright yellow colors and are less liable to be discolored and decolored by calcination. Among those, praseodymium pigments are preferable because they are even less liable to be discolored and decolored by calcination than antimony pigments and vanadium pigments.

As antimony pigments, lead antimony yellow, antimony titanium chrome yellow, antimony titanium yellow and the like are exemplified. As vanadium pigments, tin-vanadium yellow, zirconium vanadium yellow and the like are exemplified. As praseodymium pigments, zirconium praseodymium yellow and the like are exemplified.

### (Red component)

The red component included in the inorganic pigments of the embodiment is a tin-chromium pigment. Tin-chromium pigments allow representation of bright red colors and are less liable to be discolored and decolored by calcination. In addition, although tin-chromium pigments have a color tone similar to gold purple, they are relatively low-priced. As tin-chromium pigments, chrome tin maroon and the like are exemplified.

### (Blue component)

The blue component included in the inorganic pigments of the embodiment is a cobalt pigment. Cobalt pigments allow representation of bright blue colors and are less liable to be discolored and decolored by calcination. As cobalt pigments, Prussian blue, cobalt blue, cobalt aluminate blue, cobalt aluminate chromium blue and the like are exemplified.

### (Black component)

The black component included in the inorganic pigments of the embodiment is an iron pigment. Iron pigments allow representation of bright black colors and are less liable to be discolored and decolored by calcination. As iron pigments, iron oxide pigments such as iron oxide, manganese ferrite pigments such as manganese ferrite black and manganese ferrite copper black, and cobalt ferrite pigments such as cobalt ferrite black and cobalt chromium ferrite black and the like are exemplified. Among those, cobalt ferrite pigments are more preferable for their excellent blackness.

The ink set of the embodiment is, even when the colors are mixed, less liable to be discolored and decolored and allows excellent color representation.

A concentration of the inorganic pigment is preferably 20 wt% or more and is more preferably 25 wt% or more based on the ink. Also, the concentration of the inorganic pigment is preferably 50 wt% or less and is more preferably 45 wt% or less based on the ink. When the concentration of the inorganic pigment is less than 20 wt%, the concentration needs to be increased by increasing an ink ejection amount. In this case, the ink may overflow depending on an ink capacity of an inorganic substrate. On the other hand, when the concentration of the inorganic pigment is more than 50 wt%, a stability of the ink tends to be lowered.

### <Solvents>

A solvent is a liquid component where inorganic pigments are uniformly dispersed. There is no particular limitation on the solvents as long as one allows the inorganic pigments to be dispersed uniformly. Above all, organic solvents are preferable in that they make the ink hard to be dried and excellent in the ejection stability. In addition, the ink containing an organic solvent has a low surface tension and an excellent permeability to an inorganic substrate. When the solvent is water, highly concentrated pigment ink is difficult to be prepared. Also, when the solvent is water, an ejection defect tends to be occurred due to drying of a recording head.

As organic solvents, glycol ethers, environment-friendly (iv) Class III petroleums, (iv) Class IV petroleums and the like are preferable. As glycol ethers, diethylene glycol diethyl ether, diethylene glycol methyl ethyl glycol, diethylene glycol dibutyl ether, dipropylene glycol dimethyl ether, tetraethylene glycol dimethyl ether and the like are preferable.

In the ink set of the embodiment, synthetic resin may be contained in the ink because that allows adjustment of the ink viscosity to the one suitable for a recording head. The contained synthetic resin is preferably 0.01 wt% or more and is more preferably 1 wt% or more based on the organic solvent. Also, the contained synthetic resin is preferably 50 wt% or less and is more preferably 20 wt% or less based on the organic solvent. When the synthetic resin content is less than 0.01 wt%, the effect of viscosity adjustment is small. On the other hand, when the synthetic resin content is more than 50 wt%, an ejection defect of a recording head tends to remain and ash contents tend to be remained after calcination.

Synthetic resins are preferable in that they are soluble in an organic solvent and ash contents are hard to remain after calcination. As synthetic resins such as these, acrylic resin, urethane resin, polyester resin, vinyl acetate resin and the like are exemplified. Among those, an acrylic resin is preferable in terms of cost.

A surface tension of the ink of the ink set of the embodiment is preferably 20 mN/m or more and is more preferably 22 mN/m or more. Also, the surface tension of the ink is preferably 30 mN/m or less and is more preferably 27 mN/m or less. When the surface tension of the ink is less than 20 mN/m, the ink easily overflows from the surface of a recording head, and a continuous ejection performance may be lowered. On the other hand, when the surface tension of the ink is more than 30 mN/m, the color development may be lowered and the appearance after calcination may be spoiled because the ink becomes hard to be permeated to a substrate and has a smaller imparting amount.

Glass frit may be added to the ink of the ink set of the embodiment for the purpose of imparting an adhesive property to the ink.

Glass frit is mainly composed of silicon dioxide and used with an auxiliary agent being added in accordance with the purpose of use. As auxiliary agents, lithium carbonate, sodium carbonate, potassium carbonate, lead oxide, bismuth oxide, barium carbonate, strontium carbonate, calcium carbonate, magnesium carbonate, zinc oxide, aluminum oxide, aluminum hydroxide, boric acid, zirconium oxide, titanium oxide, natural feldspar, silica, borax, kaolin and the like are exemplified. These auxiliary agents may be used individually or in a mixed state.

Also, glass frit may be used by being added to the inorganic pigment while it is synthesized as well as by being mixed with the inorganic pigment. In the following descriptions, inorganic pigments to which glass frit is added during the synthesis are also referred to as overglaze colors.

When the inorganic pigment, the inorganic pigment with glass frit, or overglaze color is dispersed in the ink, various surfactants may be used as dispersant individually or in a mixed state.

As surfactants such as these, anionic surfactants, cationic surfactants, nonioninc surfactants, and ampholytic surfactants are exemplified. As anionic surfactants, fatty acid soap, sodium alkyl succinate, sodium alkyl benzene sulfonate, sodium alkyl naphthalene sulfonate, alkyl sulfate ester sodium salt, sodium polyoxyethylene alkyl ether sulfate, sodium dialkyl sulfosuccinate, sodium alkyl phosphate, styrene-maleic anhydride copolymer, olefin-maleic anhydride copolymer, polyacrylamide partial hydrolyzate, acrylamide acrylate copolymer, sodium alginate and the like are exemplified. As cationic surfactants, alkyl trimethyl ammonium chloride, alkyl dimethyl benzyl ammonium chloride and the like are exemplified. As nonionic surfactants, polyoxyethylene alkyl ether, polyoxyethylene alkyl aryl ether, sorbitan fatty acid ester and the like are exemplified. As ampholytic surfactants, alkylbetaine, amidobetaine and the like are exemplified. As anionic surfactants, any metal salt and ammonium salt as well as sodium salt may be used.

Additives such as surface tension conditioner, viscosity modifier, resistivity modifier, heat stabilizer, antioxidant, reduction inhibitor, antiseptic, pH regulator, antifoaming agent, wetting agent, may be added to the ink of the ink set of the embodiment as needed.

Ink containing the inorganic pigment can be obtained by mixing the above materials, then dispersing the mixture with a dispersion device such as roll mill, ball mill, colloid mill, jet mill, bead mill and sand mill, and subsequently filtrating it.

### [Method for producing inkjet printed material]

A method for producing an inkjet printed material of an embodiment of the present invention will be described in detail. The method for producing an inkjet printed material of the embodiment is a method which includes inkjet printing of ink on an inorganic substrate with the above-mentioned ink of the ink set and calcining after that. An inkjet printed material is produced by the method for producing an inkjet printed material.

There is no particular limitation on the inkjet recording methods. For example, the inkjet recording method include continuous inkjet types such as the charged modulation type, the micro dot type, the charged spraying type, the ink mist type, and on-demand types such as the piezo type, the pulse jet type, the bubble jet(registered trademark) type, the electrostatic suction type. Also, for the inkjet recording methods, either the line type in which a fixed recording head sprays ink on a recording medium or the serial type in which a recording head moves relative to a recording medium may be adopted.

In the method for inkjet printing of the embodiment, a printed ink on an inorganic substrate is preferably 0.01 g/m² or more and is more preferably 0.1 g/m² or more. Also, the printed ink is preferably 200 g/m² or less and is more preferably 50 g/m² or less. When the amount of the printed ink is less than 0.01 g/m², image representation tends to be lowered. On the other hand, when the amount of the printed ink is more than 200 g/m², there is a possibility that the ink overflows on an inorganic substrate depending on its ink capacity.

There is no particular limitation on the inorganic substrates used for the embodiment. For example, the inorganic substrates include ceramic materials such as glass, pottery and porcelain, enamel, and tile and inorganic materials such as metal.

Also, if necessary, liquid absorptive material may be arranged as an ink receiving layer on an inorganic substrate. With the liquid absorptive material arranged, an ejected ink is less likely to bleed after it is impacted on the inorganic substrate.

As a liquid absorptive material, glass frit is preferable. With an ink receiving layer consisting of glass frit arranged on an inorganic substrate, ink bleeding is less likely to occur in images after printing and calcining. Also, with an ink receiving layer consisting of uncalcined glass frit arranged on an inorganic substrate, melt mixing between the glass frit in the organic pigment and the ink and the glass frit in the ink receiving layer occurs, forming a glass coating film which is excellent in adhesiveness.

The glass frit used for the ink receiving layer may be the same or a different glass frit which can be added to the above-mentioned ink. When different types of glass frit are used, it is preferable that the two glass frits have close softening points and expansion rates. When the softening points and the expansion rates are close, defects in adhesiveness and the like can be readily prevented.

An amount of glass frit applied on drying is preferably 50 to 500 g/m². When the amount of glass frit applied on dying is less than 50 g/m², ink bleeding may not be prevented sufficiently. On the other hand, when the amount of glass frit applied on dying is more than 500 g/m², a layer of glass frit formed after calcination becomes so thick and it may have cracks and the like.

Glass frit used for the ink receiving layer preferably includes about 2 to 10 wt% cadmium in its component. When the glass frit which contains about 2 to 10 wt% cadmium is used, color development of the inorganic pigments after calcination is remarkably improved.

Further, an adhesive agent may be added, according to the need, to the ink receiving layer consisting of glass frit of the embodiment. By adding an adhesive agent, the efficiency of the process of imparting the ink receiving layer tends to be improved. As adhesive agents, natural polymers such as starch, natural gum, vegetable protein, seaweed, casein, and gelatin, semisynthetic polymers such as cellulose ether, cellulose ester, starch ether, starch ester, and processed natural gum, and synthetic polymers such as polyvinyl alcohol, polyethylene glycol, polyvinyl acetate, polyvinyl butyrate resin, polyvinyl acrylate resin, polyvinyl methyl resin, crosslinking polyacrylic acid, sodium polyacrylate, polyacrylic ester, polyacrylamide, sodium methacrylate, polybutadiene, polyurethane, polyester, polylactic acid are exemplified.

Also, additive agents such as dispersing agent, antioxidant, reduction inhibitor, pH regulator may be added, according to the need, to the ink receiving layer consisting of glass frit of the embodiment.

Back to descriptions of a method for inkjet printing, in the method for inkjet printing of the embodiment it is preferable that all the inorganic pigments are calcined by one calcination process. Multiple calcination tends to lead to cost problems and irregular coloring.

Generally, the calcination temperatures and times are as follows: in the case of potteries and porcelains, at 700 to 850°C for 60 to 360 minutes for a method in which a once-calcined base body is calcined at low temperature for coloring and patterning (a method for overglaze colors) and at 1100 to 1300°C for 30 to 60 minutes for in-glaze; in the case of glass, at 500 to 650°C for 30 to 60 minutes; and in the case of enamels, in a calcination furnace previously heated to 750 to 850°C for 1 to 2 minutes. These calcination temperature and time are appropriately set in consideration of heat-induced deformation of used substrates and a type of calcination furnace and the like.

For the glass frit (the glass frit as the ink receiving layer) used in the inkjet printing, material with an appropriate thermal expansion rate and a softening point is selected, as is the case for glass frit used for typical pottery and porcelain. When the thermal expansion rates and the softening points of an inorganic substrate and glass frit are significantly different, the adhesion between the glass frit and the inorganic substrate is not sufficient and adhesive failure and cracks may occur.

For example, when the inorganic substrate is glass having a softening point at around 600°C, it is preferable that glass frit having a softening point at around 600°C or less is selected. When the inorganic substrate is tile or pottery and porcelain having a softening point at around 800°C, it is preferable that glass frit having a softening point at around 800°C or less is selected.

So far, one embodiment of the present invention is described. The present invention is not limited to the above embodiment. Also, the above-mentioned embodiment mainly includes inventions having the following constitutions.

An inkjet ink set of one aspect of the present invention comprises an ink containing an inorganic pigment and a solvent, wherein the inorganic pigment include yellow, red, blue, and black components, the yellow component is any of an antimony pigment, a vanadium pigment, or a praseodymium pigment, the red component is a tin-chromium pigment, the blue component is a cobalt pigment, and the black component is an iron pigment.

In the above constitution, the yellow component is preferably an antimony pigment.

In the above constitution, the yellow component is preferably a praseodymium pigment.

In the above constitution, the iron pigment is preferably a cobalt ferrite pigment.

In the above constitution, the inorganic pigment is preferably 20 to 50 wt% based on the ink.

In the above constitution, the solvent is preferably an organic solvent.

In the above constitution, the organic solvent preferably comprises 0.01 to 50 wt% synthetic resin in an organic solvent.

In the above constitution, a surface tension of the ink is preferably 20 to 30 mN/m.

In the above constitution, a surface tension of the ink is preferably 22 to 27 mN/m.

Also, a method for producing an inkjet printed material of another aspect of the present invention, which solves the above problems, is a method for producing an inkjet printed material in which an image is formed on an inorganic substrate by inkjet using the above inkjet ink set and subsequently calcined.

In the above constitution, the ink of the inkjet ink set is preferably applied on an inorganic substrate in the range of 0.01 to 200 g/m².

Also, an inkjet printed material of another aspect of the present invention, which solves the above problems, is an inkjet printed material produced by the method for producing the above inkjet printed material.

### EXAMPLE

Now the invention is explained with examples. The present invention is not necessarily limited to these examples.

### EXAMPLE 1

Materials for producing the ink were mixed according to the following prescription and were dispersed with a ball mill disperser. After that, the impurities were removed by filtration to obtain uniform inorganic pigment ink.

**<Prescription for ink>**

| | |
|---|---|
| Inorganic pigment | 40 wt% |
| Dispersant: Solsperse 36000 (available from Lubrizol Japan Ltd.) | 20 wt% |
| Organic solvent: DEDG (available from Nippon Nyukazai Co., Ltd.) | 30 wt% |
| Synthetic resin: MB-2677 (available from Mitsubishi Rayon Co., Ltd.) | 10 wt% |
| Total | 100 wt% |

Physical properties of the ink were adjusted to as follows:

### <Physical properties of the ink>

Viscosity: 11 mPa·s
Surface tension: 25 mN/m

The following inorganic pigments were used.

### <Inorganic pigment>

Yellow component: YELLOW 3-1 available from Izawa Pigment Co., Ltd.

### (an antimony pigment)

Red component: 86T913 available from Izawa Pigment Co., Ltd. (a tin-chromium pigment)
Blue component: CYAN 8-4F available from Izawa Pigment Co., Ltd. (a cobalt pigment)
Black component: BLACK 7-1 available from Izawa Pigment Co., Ltd. (an iron pigment)

The following steps were taken to form an ink receiving layer on tile (pottery and porcelain tile: glazing).

Glass frit was dry-dispersed with a ball mill. And then, polyvinyl alcohol and pure water were added to the glass frit, a mixture is kneaded in a mortar, tile was coated with the mixture using a screen, and then that is dried at 110°C for 10 minutes to form an ink receiving layer on a substrate.

### <Prescription for ink receiving layer>

Glass frit 32117 (glass flux containing cadmium, available from Izawa

| | |
|---|---|
| Pigment Co., Ltd.) | 65 wt% |
| Polyvinyl alcohol (an adhesive: PVA-110, available from Kuraray Co., Ltd) | 5 wt% |
| Pure water | the rest |
| Total | 100 wt% |

Recording was performed on the tile provided with this ink receiving layer using an inkjet printer with the above-mentioned ink under the following conditions of decoration.

### <Conditions of inkjet decoration>

Nozzle diameter: 70 µm
Voltage: 50V
Pulse width: 15 µm
Drive frequency: 2 kHz
Amount of ink: 200 g/m²
Patterns: Each single color and each mixed color (a secondary color, a tertiary color, and a quaternary color) are expressed with solid patterns.

After recording, calcination was conducted with an electrical furnace for pottery under the following conditions, and intended-colored products are obtained.

### <Calcination conditions>

Temperature: 1150°C
Time: 45 minutes

The obtained products were evaluated in the following manner.

### <Evaluation contents>

### (Ink overflow)

o Ink overflow did not occur.
× Ink overflow occurred.

### (Color development)

o In visual determination, color representation was achieved with rich clearness.
× In visual determination, the images were faded with poor clearness.

### (Ejection performance)

o In a 30-minute continuous ejection, nozzle clogging did not occur, or ink overflow from a head surface did not occur.
× In a 30-minute continuous ejection, nozzle clogging occurred, or ink overflow from a head surface occurred.

### (Appearance after calcination)

o In visual determination, glossy feeling was achieved.
× In visual determination, glossy feeling was impaired

### EXAMPLE 2

Inkjet printed materials were produced in the same manner as Example 1 except that a yellow component to be used was changed to a praseodymium pigment, and an evaluation was made. Yellow component: 86T3001 available from Izawa Pigment Co., Ltd. (a praseodymium pigment)

### COMPARATIVE EXAMPLE 1

Inkjet printed materials were produced in the same manner as Example 1 except that a red component to be used was changed to an iron oxide pigment, and an evaluation was made.
Red component: Brown 4130 available from Asahi Kasei Kogyo Co., Ltd. (an iron oxide pigment)

### COMPARATIVE EXAMPLE 2

Inkjet printed materials were produced in the same manner as Example 1 except that a yellow component to be used was changed to an iron oxide pigment, and an evaluation was made.
Yellow component: Brown 4110 available from Asahi Kasei Kogyo Co., Ltd. (an iron oxide pigment)

The result of Examples 1 to 2 and Comparative Examples 1 to 2 is shown in the table below.

**TABLE 1**

| | Example 1 | Example 2 | Comparative Example 1 | Comparative Example 2 |
|---|---|---|---|---|
| Yellow component pigment | Antimony pigment | Praseodymium pigment | Antimony pigment | Iron oxide pigment |
| Red component pigment | Tin-chromium pigment | Tin-chromium pigment | Iron oxide pigment | Tin-chromium pigment |
| Blue component pigment | Cobalt pigment | Cobalt pigment | Cobalt pigment | Cobalt pigment |
| Black component pigment | Iron pigment | Iron pigment | Iron pigment | Iron pigment |
| Pigment concentration (wt%) | 40 | 40 | 40 | 40 |
| Organic solvent (wt%) | 30 | 30 | 30 | 30 |
| Synthetic resin (% based on organic solvent) | 33 | 33 | 33 | 33 |
| Surface tension (mN/m) | 25 | 25 | 25 | 25 |
| Ink application amount (g/m²) | 170 | 170 | 170 | 170 |
| Ink overflow | ○ | ○ | ○ | ○ |
| Color development | ○ | ○ | × | × |
| Ejection performance | ○ | ○ | ○ | ○ |
| Appearance after calcination | ○ | ○ | ○ | ○ |

As shown in Table 1, the ink sets of Example 1 and Example 2, in which the yellow components are any ones of an antimony pigment, vanadium pigment, or praseodymium pigment, the red components are tin-chromium pigments, the blue components are cobalt pigments, and the black components are iron pigments, are excellent in any of ink overflow, color development, ejection performance, and appearance after calcination. On the other hand, with the ink set of Comparative Example 1, which contains an iron oxide pigment as a red component, the result of color development was poor. Also, with the ink set of Comparative Example 2, which contains an iron oxide pigment as a yellow component, the result of color development was poor.

## Claims

1. An inkjet ink set which comprises an ink containing an inorganic pigment and a solvent,
wherein the inorganic pigment include yellow, red, blue, and black components,
the yellow pigment is at least one selected from a group consisting of antimony pigments, vanadium pigments, and praseodymium pigments, the red component is a tin-chromium pigment,
the blue component is a cobalt pigment, and
the black component is an iron pigment.

2. The inkjet ink set of claim 1, wherein the yellow component is an antimony pigment.

3. The inkjet ink set of claim 1, wherein the yellow component is a praseodymium pigment.

4. The inkjet ink set of any of claims 1 to 3, wherein the iron pigment is a cobalt ferrite pigment.

5. The inkjet ink set of any of claims 1 to 4, wherein the inorganic pigment is 20 to 50 wt% base on the ink.

6. The inkjet ink set of any of claims 1 to 5, wherein the solvent is an organic solvent.

7. The inkjet ink set of claim 6, wherein the organic solvent comprises 0.01 to 50 wt% synthetic resin in an organic solvent.

8. The inkjet ink set of any of claims 1 to 7, wherein a surface tension of the ink is 20 to 30 mN/m.

9. The inkjet ink set of claim 2, wherein a surface tension of the ink is 22 to 27 mN/m.

10. A method for producing an inkjet printed material in which an image is formed on an inorganic substrate by inkjet using the inkjet ink set of any of claims 1 to 9 and subsequently calcined.

11. The method for producing an inkjet printed material of claim 10, wherein ink of inkjet ink set is applied on an inorganic substrate in the range of 0.01 to 200 g/m².

12. An inkjet printed material produced by the method for producing an inkjet printed material of claim 10.
